(19) **Europäisches Patentamt European Patent Office Office européen des brevets**

(11) **EP 4 614 531 A1**

(12) **EUROPEAN PATENT APPLICATION**
published in accordance with Art. 153(4) EPC

(43) Date of publication:
**10.09.2025 Bulletin 2025/37**

(21) Application number: **23885694.2**

(22) Date of filing: **27.10.2023**

(51) International Patent Classification (IPC):
**H01B 13/00** (2006.01)    **C01B 25/14** (2006.01)
**H01M 10/0562** (2010.01)

(52) Cooperative Patent Classification (CPC):
**C01B 25/14; H01B 13/00; H01M 10/0562;**
**Y02E 60/10**

(86) International application number:
**PCT/JP2023/039005**

(87) International publication number:
**WO 2024/095938 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.11.2022  JP 2022176693**

(71) Applicant: **AGC INC.**
**Chiyoda-ku,**
**Tokyo 1008405 (JP)**

(72) Inventors:
• **OMORI, Norifumi**
  **Tokyo 100-8405 (JP)**
• **FUJII, Naoki**
  **Tokyo 100-8405 (JP)**

(74) Representative: **Müller-Boré & Partner**
**Patentanwälte PartG mbB**
**Friedenheimer Brücke 21**
**80639 München (DE)**

(54) **PRODUCTION METHOD FOR SULFIDE SOLID ELECTROLYTE AND PRODUCTION DEVICE FOR SULFIDE SOLID ELECTROLYTE**

(57)    The present invention relates to a production method for a sulfide solid electrolyte by which a sulfide solid electrolyte starting material is supplied to a vat of a heating furnace, and the sulfide solid electrolyte starting material is melted by heat in an elemental sulfur-containing gas atmosphere, the method comprising attaining a molten liquid through the melting by heat, and raising the temperature towards the bottom of the molten liquid in the vat so as to be higher than the temperature on the liquid surface side of the molten liquid.

FIG. 3

**Description**

TECHNICAL FIELD

The present invention relates to a method for producing a sulfide solid electrolyte and an apparatus for producing a sulfide solid electrolyte.

BACKGROUND ART

Lithium-ion secondary batteries are widely used in portable electronic devices such as mobile phones and laptop computers. In the related art, a liquid electrolyte has been used in a lithium-ion secondary battery. On the other hand, attention has been paid to an all-solid-state lithium-ion secondary battery in which a solid electrolyte is used as an electrolyte of a lithium-ion secondary battery in recent years, from the viewpoint of improving safety, charging and discharging at a high speed, and reducing the size of a case.

Examples of the solid electrolyte used in the all-solid-state lithium-ion secondary battery include a sulfide solid electrolyte.

Examples of a method for synthesizing a sulfide solid electrolyte include a method in which a sulfide solid electrolyte raw material is heated and melted to prepare a melt, and the melt is cooled and solidified. In such a method, it is known that a sulfur component volatilizes during heating, and composition control becomes difficult in some cases.

On the other hand, Patent Literature 1 describes a method for producing a sulfide lithium-ion conductive solid electrolyte, which includes mixing constituent compounds of the sulfide lithium-ion conductive solid electrolyte in a predetermined stoichiometric mixture ratio and heating and melting the mixture under an excess of sulfur. According to such a method, it is possible to react the constituent compounds without reducing sulfur in the constituent compounds, and it is possible to obtain a sulfide lithium-ion conductive solid electrolyte having a target chemical composition and excellent ion conductivity.

Patent Literature 2 describes an apparatus for producing a solid electrolyte glass which includes a compression portion that compresses a raw material supplied from a raw material supply portion. According to the production apparatus, it is possible to prevent a composition deviation and improve productivity.

CITATION LIST

PATENT LITERATURE

Patent Literature 1: JPH06-115911A
Patent Literature 2: JP2012-096973A

SUMMARY OF INVENTION

TECHNICAL PROBLEM

However, in the method described in Patent Literature 1, when a production amount is increased and an amount of the melt is increased, a sulfur component supplemented on a surface of the melt is less likely to diffuse uniformly throughout, and it is difficult to stably obtain a homogeneous sulfide solid electrolyte.

The production apparatus described in Patent Literature 2 has a complicated structure, is difficult to obtain a stable and homogeneous sulfide solid electrolyte, and is not suitable for mass production.

Therefore, an object of the present invention is to provide a method for producing a sulfide solid electrolyte and an apparatus for producing a sulfide solid electrolyte capable of stably synthesizing a homogeneous sulfide solid electrolyte.

SOLUTION TO PROBLEM

As a result of intensive studies, the present inventors have found that the above problems can be solved by controlling a temperature of a lower portion of a melt to be higher than a temperature of an upper portion of the melt in a method for producing a sulfide solid electrolyte in which a sulfide solid electrolyte raw material is heated and melted in a gas atmosphere containing a sulfur element, and have completed the present invention.

That is, the present invention relates to the following 1 to 10.

1. A method for producing a sulfide solid electrolyte including: supplying a sulfide solid electrolyte raw material to a tank of a heating furnace; and heating and melting the sulfide solid electrolyte raw material in a gas atmosphere containing a sulfur element,

in which the method includes: obtaining a melt by the heating and melting; and setting a temperature on a bottom side of the melt to be higher than a temperature on a liquid surface side of the melt in the tank.

2. The method for producing a sulfide solid electrolyte according to the above 1, in which the supply of the sulfide solid electrolyte raw material to the tank and a discharge of the melt to an outside of the heating furnace are continuously performed.

3. The method for producing a sulfide solid electrolyte according to the above 1, in which a depth of the melt in the tank is 50 mm or more.

4. The method for producing a sulfide solid electrolyte according to the above 1, in which the temperature on the bottom side of the melt is 700°C or higher in the tank.

5. The method for producing a sulfide solid electrolyte according to the above 1, in which in the tank, the temperature on the bottom side of the melt is higher than the temperature on the liquid surface side of the melt by 10°C or higher.

6. The method for producing a sulfide solid electrolyte according to the above 1, in which the gas atmosphere containing the sulfur element is obtained by supplying a gas containing a sulfur element to the heating furnace.

7. The method for producing a sulfide solid electrolyte according to the above 1, in which the gas atmosphere containing the sulfur element is obtained by supplying a solid containing a sulfur element to the heating furnace.

8. The method for producing a sulfide solid electrolyte according to any one of the above 1 to 7,

in which the heating furnace includes the tank to which the sulfide solid electrolyte raw material is supplied, and an additional tank to which the melt of the sulfide solid electrolyte raw material heated and melted in the tank is supplied, and

the supply of the sulfide solid electrolyte raw material to the tank and a discharge of the melt from the additional tank to an outside of the heating furnace are continuously performed, and a temperature of the melt in the additional tank is controlled to be higher than a minimum temperature of the melt in the tank.

9. An apparatus for producing a sulfide solid electrolyte, the apparatus including:

a heating furnace including a tank and a heating portion for heating and melting a sulfide solid electrolyte raw material in a gas atmosphere containing a sulfur element; and

a control unit configured to control a heat generation amount of the heating portion such that a temperature on a bottom side of a melt obtained by the heating and melting is higher than a temperature on a liquid surface side of the melt.

10. The apparatus for producing a sulfide solid electrolyte according to the above 9,

in which the heating furnace includes: the tank to which the sulfide solid electrolyte raw material is supplied; an additional tank to which the melt of the sulfide solid electrolyte raw material heated and melted in the tank is supplied; the heating portion for heating and melting the sulfide solid electrolyte raw material in the tank, and an additional heating portion for heating the melt in the additional tank, and

the control unit is configured to control the heat generation amount of the heating portion and a heat generation amount of the additional heating portion such that a temperature of the melt in the additional tank is higher than a minimum temperature of the melt in the tank.

ADVANTAGEOUS EFFECTS OF INVENTION

According to the present invention, it is possible to provide a method for producing a sulfide solid electrolyte and an apparatus for producing a sulfide solid electrolyte capable of stably synthesizing a homogeneous sulfide solid electrolyte. Furthermore, the present production method is also excellent in productivity. Further, according to the present production method, a quality of the obtained sulfide solid electrolyte can be stabilized.

BRIEF DESCRIPTION OF DRAWINGS

FIG. 1 is a flowchart illustrating an aspect of the present production method.

FIG. 2 is a flowchart illustrating an aspect of the present production method.

FIG. 3 is a diagram schematically illustrating an aspect of the present production method and the present production apparatus.

FIG. 4 is a diagram schematically illustrating an aspect of the present production method and the present production apparatus.

FIG. 5 is a diagram schematically illustrating an aspect of the present production method and the present production apparatus.

FIG. 6 is a diagram illustrating an analysis model used in simulation.

DESCRIPTION OF EMBODIMENTS

Hereinafter, the present invention is described in detail, but the present invention is not limited to the following embodiment and can be freely modified and implemented without departing from the gist of the present invention. The symbol "-" or the word "to" that is used to express a numerical range includes the numerical values before and after the symbol or the word as the upper limit and the lower limit of the range, respectively. In the present specification, "mass" is synonymous with "weight". In the following drawings, members and portions having the same functions may be denoted by the same reference numerals, and duplicate descriptions may be omitted or simplified. Embodiments described in the drawings are schematically for the purpose of clearly illustrating the present invention, and do not necessarily accurately represent a size or a scale of an actual apparatus.

(Method for Producing Sulfide Solid Electrolyte)

A method for producing a sulfide solid electrolyte according to an embodiment of the present invention (hereinafter, also referred to as the present production method) is a method for producing a sulfide solid electrolyte in which a sulfide solid electrolyte raw material is supplied to a tank (first tank) of a heating furnace, and the sulfide solid electrolyte raw material is heated and melted in a gas atmosphere containing a sulfur element, and the method includes: obtaining a melt by the heating and melting; and setting a temperature on a bottom side of the melt to be higher than a temperature on a liquid surface side of the melt in the tank (first tank).

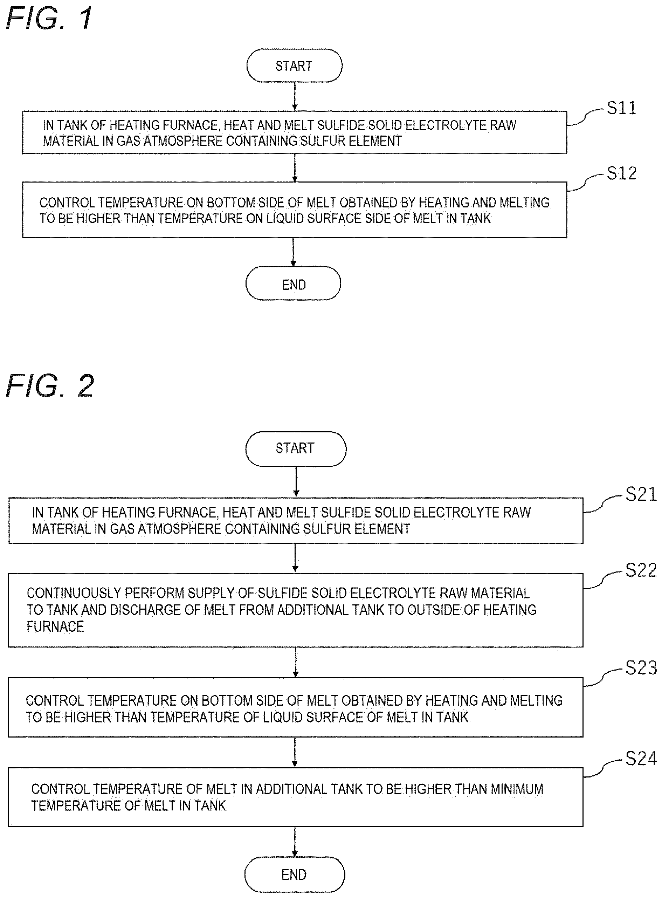

FIG. 1 is a flowchart illustrating an aspect of the present production method. The present production method includes, for example, step S11 of heating and melting the sulfide solid electrolyte raw material in the tank of the heating furnace under the gas atmosphere containing the sulfur element, and step S12 of controlling the temperature on the bottom side of a melt obtained by the heating and melting to be higher than a temperature on a liquid surface side of the melt in the tank. Steps S11 and S12 may be performed in parallel, for example.

As described in detail later, in the present production method, the heating furnace may include the tank to which the sulfide solid electrolyte raw material is supplied, and an additional tank to which the melt of the sulfide solid electrolyte raw material heated and melted in the tank is supplied. FIG. 2 is a flowchart illustrating an aspect of the present production method in this case. The present production method includes, for example, step S21 of heating and melting the sulfide solid electrolyte raw material in the tank of the heating furnace under the gas atmosphere containing the sulfur element, step S22 of continuously performing a supply of the sulfide solid electrolyte raw material to the tank and a discharge of the melt from the additional tank to an outside of the heating furnace, step S23 of controlling the temperature on the bottom side of the melt obtained by the heating and melting to be higher than the temperature on the liquid surface side of the melt in the tank, and step S24 of controlling the temperature of the melt in the additional tank of the heating furnace to be higher than a minimum temperature of the melt in the first tank. Steps S21 to S24 may be performed in parallel, for example.

Hereinafter, the present production method is described together with an example of an apparatus for producing a sulfide solid electrolyte (hereinafter, also referred to as the present production apparatus) used in the present invention. In the present specification, the tank of the heating furnace to which the sulfide solid electrolyte raw material is supplied and in which the sulfide solid electrolyte raw material is heated and melted may be referred to as the first tank, and a heating portion for heating and melting the sulfide solid electrolyte raw material in the tank (first tank) may be referred to as a first heating portion. Further, when the heating furnace includes the additional tank, the additional tank may be referred to as a second tank, and an additional heating portion for heating the melt in the additional tank (second tank) may be referred to as a second heating portion.

An aspect of the present production apparatus includes: a heating furnace that includes a tank (first tank) and a heating portion (first heating portion) for heating and melting a sulfide solid electrolyte raw material under a gas atmosphere containing a sulfur element; and a control unit configured to control a heat generation amount of the heating portion (first heating portion) such that a temperature on a bottom side of a melt obtained by the heating and melting is higher than a temperature on a liquid surface side of the melt.

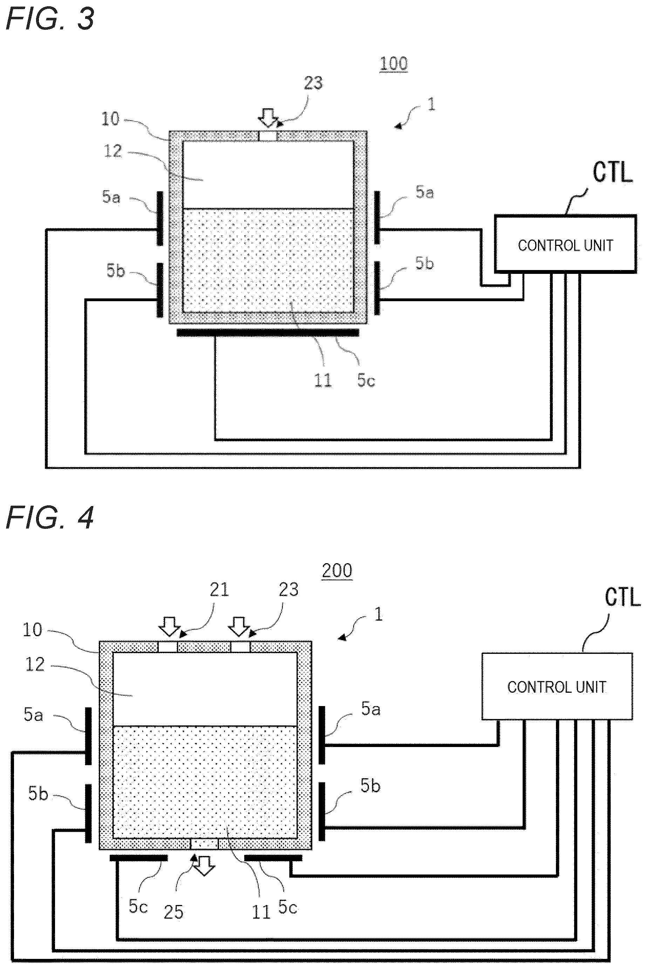

FIG. 3 is a diagram schematically illustrating an aspect of the present production method and the present production apparatus. In FIG. 3, an apparatus 100 for producing a sulfide solid electrolyte includes a heating furnace 1, and the heating furnace 1 includes a first tank 10 and a first heating portion for heating and melting a sulfide solid electrolyte raw material in a gas atmosphere containing a sulfur element. The production apparatus 100 also includes a control unit CTL that controls a heat generation amount of the first heating portion such that a temperature on a bottom side of the melt 11 obtained by the heating and melting in the first tank is higher than a temperature on a liquid surface side of the melt. The production apparatus 100 in FIG. 3 includes heating portions 5a, 5b, and 5c as the first heating portion.

The first tank 10 of the heating furnace 1 is a heating chamber in which an object to be heated, that is, a sulfide solid electrolyte raw material in the case of the present production method is heated and melted. In the present production method, the sulfide solid electrolyte raw material is supplied to the first tank 10, and the sulfide solid electrolyte raw material is heated and melted in the gas atmosphere containing the sulfur element. In order to heat and melt in the gas atmosphere containing the sulfur element, the first tank 10 may include a sulfur source supply portion 23.

The production apparatus 100 also includes the control unit CTL that controls the heat generation amount of the first heating portion such that the temperature on the bottom side of the melt 11 obtained by the heating and melting is higher than the temperature on the liquid surface side of the melt in the first tank 10. In the aspect illustrated in FIG. 3, the production apparatus 100 includes, as the first heating portion, the heating portions 5a, 5b, and 5c capable of heating the first tank 10. The heating portions 5a, 5b, and 5c may be, for example, heating units capable of independently controlling heat generation amounts, and each heat generation amount is controlled by the control unit. Specifically, for example, the control unit controls the heat generation amount of the respective heating portions so that a temperature of the melt mainly heated by the heating portion 5b disposed on a relatively lower side of a first tank side surface or the heating portion 5c disposed on a first tank bottom surface side is higher than a temperature of the melt mainly heated by the heating portion 5a disposed on a relatively upper side of the first tank side surface, so that the temperature on the bottom side of the melt 11 in the first tank 10 can be made higher than the temperature on the liquid surface side of the melt. As described above, a specific aspect of the control unit is not particularly limited as long as a temperature on a bottom side of the melt 11 can be higher than a temperature on a liquid surface side of the melt in the first tank 10, and a known configuration can be adopted. For example, the control unit includes an input unit (not shown) and is connected to the first heating portion by a known method capable of transmitting a signal or the like for controlling the heat generation amount of the first heating portion to the first heating portion. The control unit outputs a signal for controlling the heat generation amount of each heating portion based on an instruction such as a set temperature or a set heat generation amount of the heating portion input from the input unit, and controls the heat generation amount of each heating portion to make the temperature on the bottom side of the melt higher than the temperature of the liquid surface side of the melt. The number of control units may be one or more as long as the above-described control is possible for the entire production apparatus.

A specific aspect of the first heating portion is not particularly limited, and the heating portions 5a, 5b, and 5c may be known heating units such as a heater provided on the heating furnace 1 or a high-frequency induction heating device. Examples of the heater include a heater that heats an object by passing a current through a heating material such as a kanthal heater, a carbon heater, or a SiC heater, and a heater that performs radiation heating such as a halogen heater.

The present inventors have found that, in the method for producing a sulfide solid electrolyte in which the sulfide solid electrolyte raw material is heated and melted in the gas atmosphere containing the sulfur element, a homogeneous sulfide solid electrolyte can be stably synthesized by controlling a temperature of a lower portion of the melt to be higher than a temperature of an upper portion of the melt, and have completed the present invention. When the sulfide solid electrolyte raw material is heated and melted in the gas atmosphere containing the sulfur element, the liquid surface of the melt is brought into contact with the gas atmosphere containing the sulfur element to introduce a sulfur component. On the other hand, although not recognized as a problem in the related art, it has been found that, in the melt of the sulfide solid electrolyte (raw material), the sulfur component is less likely to diffuse in a depth direction, and even when the sulfur component is introduced to the liquid surface side of the melt in contact with the gas atmosphere containing the sulfur element, the sulfur component is less likely to be introduced to a relatively bottom side of the melt not in contact with the atmosphere. On the other hand, in the present production method, by making the temperature on the bottom side of the melt higher than the temperature on the liquid surface side of the melt in the first tank, specific gravity of the melt on the bottom side of the first tank becomes smaller, and the melt moves to the upper side. Accordingly, circulation occurs in the melt, and the melt efficiently comes into contact with the gas atmosphere containing the sulfur element. Therefore, it is considered that the sulfur component is homogeneously introduced into the entire melt, and the obtained sulfide solid electrolyte becomes homogeneous. Further, since sulfur can be efficiently introduced into the melt, the productivity is excellent. Furthermore, in the sulfide solid electrolyte, a shortage of the sulfur component may reduce lithium-ion conductivity and may reduce a quality thereof. On the other hand, according to the present production method, since an appropriate amount of sulfur can be introduced into the entire melt, the quality of the obtained sulfide solid electrolyte is also stabilized.

Although it is conceivable to circulate the melt by introducing a member such as a stirring blade into the furnace and stirring the melt, when such a member is introduced, a member including a rotating shaft is generally introduced into the furnace. In this case, in a system in which components volatilize in the furnace or gas is introduced, it is necessary to design an apparatus or perform maintenance in consideration of gas leakage from a shaft portion, and stable production is difficult. On the other hand, according to the present production method and the present production apparatus, it is possible to heat and melt the furnace in a sealed state, and it is possible to more stably produce a homogeneous sulfide solid electrolyte.

FIG. 4 is a diagram schematically illustrating another aspect of the present production method and the present production apparatus. In a production apparatus 200 shown in FIG. 4, the first tank 10 includes a raw material supply portion 21 and a discharge portion 25. As described above, in the present production method and the present production apparatus, the first tank may appropriately include the raw material supply portion that supplies the sulfide solid electrolyte raw material into the tank and the discharge portion that discharges the melt to the outside of the heating furnace. A specific aspect of the discharge portion is not particularly limited, but examples thereof include an aspect in which an opening (passing portion) is provided in a wall or a bottom in the first tank, and an aspect in which a tube (nozzle) capable of communicating with the outside of the heating furnace is disposed. In the production apparatus 100 illustrated in FIG. 3, for example, it is conceivable to heat and melt the sulfide solid electrolyte raw material supplied to the first tank 10 in advance, and recover the sulfide solid electrolyte obtained after the completion of the heating and melting, thereby performing the heating and melting in a batch process. On the other hand, as illustrated in FIG. 4, the heating and melting may be continuously performed by continuously performing a supply of the sulfide solid electrolyte raw material from the raw material supply portion 21 and a discharge of the melt from the discharge portion 25 to the outside of the heating furnace while performing the heating and melting in the first tank 10. That is, when the heating and melting are continuously performed in the present production method, it is preferable to continuously perform the supply of the sulfide solid electrolyte raw material to the tank (first tank) of the heating furnace and the discharge of the melt to the outside of the heating furnace.

In the production apparatus 100 illustrated in FIG. 4, a sulfur source (gas, solid, or the like containing the sulfur element) may be supplied not only from the sulfur source supply portion 23 but also from the raw material supply portion 21. Further, a portion capable of supplying the raw material and the sulfur source (gas, solid, or the like containing the sulfur element) may be provided in the first tank 10 so as to serve as both the raw material supply portion 21 and the sulfur source supply portion 23, and the raw material and the sulfur source may be supplied from the portion. In this case, the first tank may include only one portion to which the raw material and the sulfur source can be supplied.

In the present production method, it is preferable that the heating furnace includes the tank (the above-described first tank) to which the sulfide solid electrolyte raw material is supplied, and the additional tank (second tank) to which the melt of the sulfide solid electrolyte raw material heated and melted in the tank (first tank) is supplied, the supply of the sulfide solid electrolyte raw material to the tank (first tank) and the discharge of the melt from the additional tank (second tank) to the outside of the heating furnace are continuously performed, and the temperature of the melt in the additional tank (second tank) is controlled to be higher than the minimum temperature of the melt in the tank (first tank).

In this case, in the present production apparatus, it is preferable that the heating furnace includes the tank (the above-described first tank) to which the sulfide solid electrolyte raw material is supplied, the additional tank (second tank) to which the melt of the sulfide solid electrolyte raw material heated and melted in the tank (first tank) is supplied, the heating portion (first heating portion) for heating and melting the sulfide solid electrolyte raw material in the tank (first tank), and the additional heating portion (second heating portion) for heating the melt in the additional tank (second tank), and the control unit controls the heat generation amount of the heating portion (first heating portion) and the heat generation amount of the additional heating portion (second heating portion) such that the temperature of the melt in the additional tank (second tank) is higher than the minimum temperature of the melt in the tank.

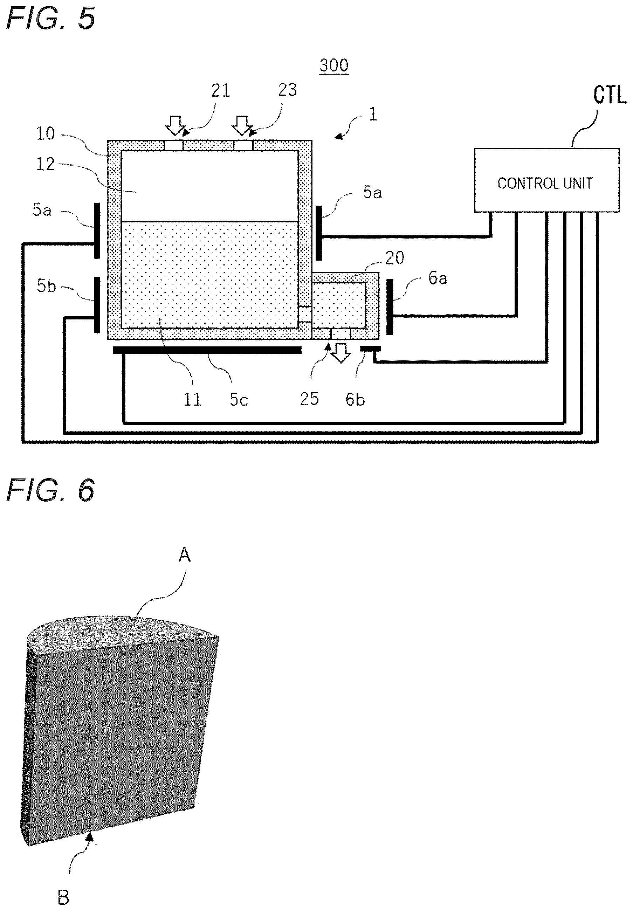

FIG. 5 is a diagram schematically illustrating an aspect of the present production method and the present production apparatus when the heating furnace includes the additional tank (second tank). **In** a production apparatus 300 shown in FIG. 5, the heating furnace 1 includes the first tank 10 to which the sulfide solid electrolyte raw material is supplied, a second tank 20 to which the melt of the sulfide solid electrolyte raw material heated and melted in the first tank 10 is supplied, a first heating portion heating and melting the sulfide solid electrolyte raw material in the first tank 10, and a second heating portion for heating the melt in the second tank 20. For example, in order to supply the melt of the sulfide solid electrolyte raw material heated and melted in the first tank 10 to the second tank 20, the heating furnace 1 may include a passage 7 through which the melt can pass between the first tank 10 and the second tank 20. **In** order to continuously perform the supply of the sulfide solid electrolyte raw material to the first tank and the discharge of the melt from the second tank to the outside of the heating furnace, the heating furnace 1 may include a discharge portion 25 provided in the second tank 20, which discharges the melt to the outside of the heating furnace. Further, the production apparatus 300 includes the second heating portion for heating the melt in the second tank. In the configuration illustrated in FIG. 5, the second heating portion includes a heating portion 6a and a heating portion 6b. The second heating portion may be, for example, a heating unit capable of controlling a heat generation amount independently of the first heating portion, and the respective heat generation amounts are controlled by the control unit. In the configuration illustrated in FIG. 5, the control unit is connected to the heating portions by a known method capable of transmitting signals or the like for controlling the heat generation amounts of the first heating portions and the second heating portions to the respective heating portions. The heat generation amount of the first heating portion is controlled such that the temperature on the bottom side of the melt 11 in the first tank is higher than the temperature on the liquid surface side of the melt, and the heat generation amount of the first heating portion and the heat generation amount of the second heating portion are controlled such that the temperature of the melt in the second tank is higher than the minimum temperature of the melt in the tank. As in the case where the temperature on the bottom side of the melt in the first tank is made higher than the temperature on the liquid surface side of the melt, the control unit can make the temperature of the melt in the second tank higher than the minimum temperature of the melt in the first tank by outputting the signal for controlling the heat generation amount of each heating portion based on the instruction such as a set temperature or a set heat generation amount of each heating portion input from the input unit and controlling the heat generation amount of each heating portion.

When the heating and the melting are continuously performed using the production apparatus 200 illustrated in FIG. 4, the sulfide solid electrolyte raw material is continuously supplied into the first tank as the melt is discharged. In this case, although the effect of the present invention can be obtained by circulating the melt, the melt in a state where the reaction has not progressed sufficiently after being supplied to the first tank may be discharged from the discharge portion. On the other hand, as illustrated in FIG. 5, when the discharge portion is provided in the second tank communicating with the first tank via the passage and the temperature of the melt in the second tank is set to be higher than the minimum temperature of the melt in the first tank, the melt is less likely to flow into the second tank until the melt is heated to the same degree as or higher than the melt in the second tank. Accordingly, the melt that is sufficiently heated is preferentially discharged, and the melt in the state where the reaction has not progressed sufficiently can be prevented from being discharged from the discharge portion. Configurations of the first tank and the second tank are not limited to the form in which two tanks communicate with each other through the passage portion as illustrated in FIG. 5, and for example, two tanks and the passage portion may be substantially formed by providing a partition inside one tank.

(Sulfide Solid Electrolyte Raw Material)

In the present production method, various raw materials can be used as the sulfide solid electrolyte raw material (hereinafter sometimes referred to as the present raw material).

As the present raw material, a commercially available sulfide solid electrolyte raw material may be used, or a sulfide solid electrolyte raw material produced from a material may be used. These sulfide solid electrolyte raw materials may be further subjected to a known pretreatment. That is, the present production method may appropriately include a step of producing the present raw material or a step of subjecting the present raw material to a pretreatment.

The sulfide solid electrolyte raw material is specifically described below. The sulfide solid electrolyte raw material usually contains an alkali metal element (R) and a sulfur element (S).

Examples of the alkali metal element (R) include lithium element (Li), sodium element (Na), and potassium element (K), and among these elements, the lithium element (Li) is preferable. As the alkali metal element (R), substances (components) containing an alkali metal element such as elemental alkali metal element and compounds containing an alkali metal element can be appropriately combined and used. Here, as the lithium element, Li-containing substances (components), such as elemental Li and Li-containing compounds, can be appropriately combined and used.

Examples of a substance containing the lithium element (Li) include lithium compounds such as lithium sulfide ($Li_2S$), lithium iodide (LiI), lithium carbonate ($Li_2CO_3$), lithium sulfate ($Li_2SO_4$), lithium oxide ($Li_2O$), lithium nitride ($Li_3N$), and lithium hydroxide (LiOH), and metallic lithium. As the substance containing the lithium element (Li), from the viewpoint of obtaining a sulfide material, it is preferable to use lithium sulfide.

As the sulfur element (S), S-containing substances (components), such as elemental S and S-containing compounds, can be appropriately combined and used.

Examples of a substance containing the sulfur element (S) include phosphorus sulfides such as phosphorus trisulfide ($P_2S_3$) and phosphorus pentasulfide ($P_2S_5$), other sulfur compounds containing phosphorus, elemental sulfur, and a compound containing sulfur. Examples of the compound containing sulfur include $H_2S$, $CS_2$, $Na_2S$, iron sulfides (such as FeS, $Fe_2S_3$, $FeS_2$, $Fe_{1-x}S$), bismuth sulfide ($Bi_2S_3$), antimony sulfide ($Sb_2S_3$), copper sulfides (such as CuS, $Cu_2S$, $Cu_{1-x}S$), tin sulfide ($SnS_2$), and tungsten sulfide ($WS_2$). From the viewpoint of obtaining a sulfide material, the substance containing the sulfur element (S) is preferably phosphorus sulfide, and more preferably phosphorus pentasulfide ($P_2S_5$). These substances may be used alone or in combination of two or more kinds thereof. Phosphorus sulfide can be considered as a compound that serves as both the S-containing substance and a P-containing substance, which is described later.

From the viewpoint of improving an ionic conductivity and the like of the obtained sulfide solid electrolyte, it is preferable that the present raw material further contains a phosphorus element (P). As the phosphorus element (P), P-containing substances (components), such as elemental P and P-containing compounds, can be appropriately combined and used.

Examples of a substance containing the phosphorus element (P) include phosphorus sulfides such as phosphorus trisulfide ($P_2S_3$) and phosphorus pentasulfide ($P_2S_5$), phosphorus compounds such as sodium phosphate

$(Na_3PO_4)$, and elemental phosphorus. As the substance containing the phosphorus element (P), from the viewpoint of exerting the effect of the present invention more effectively, phosphorus sulfide having high volatility is preferable, and phosphorus pentasulfide $(P_2S_5)$ is more preferable. These substances may be used alone or in combination of two or more kinds thereof.

The present raw material may be obtained as a mixed raw material by, for example, appropriately mixing the above-mentioned substances according to a composition of the desired sulfide solid electrolyte. A mixing ratio is not particularly limited, but for example, a molar ratio S/R of the sulfur element (S) to the alkali metal element (R) in the present raw material is preferably 0.65/0.35 or less, and more preferably 0.5/0.5 or less, from the viewpoint of improving the ionic conductivity and the like of the obtained sulfide solid electrolyte. The mixed raw material is preferably obtained by mixing the raw materials in a predetermined stoichiometric mixture ratio according to the materials used for the mixing. Examples of a mixing method include mixing in a mortar, mixing using a medium such as a planetary ball mill, and medium-less mixing such as a pin mill, a powder stirrer, and air flow mixing.

Examples of a preferred combination of the alkali metal element and the sulfur element contained in the present raw material include a combination of $Li_2S$ and $P_2S_5$. When $Li_2S$ and $P_2S_5$ are combined, a molar ratio Li/P of Li to P is preferably from 40/60 or more, and more preferably from 50/50 or more. The molar ratio Li/P of Li to P, is preferably 88/12 or less. The molar ratio Li/P of Li to P is preferably from 40/60 to 88/12, and more preferably from 50/50 to 88/12. By adjusting the mixing ratio so that the amount of $P_2S_5$ is relatively smaller than $Li_2S$, it becomes easier to prevent volatilization of sulfur and phosphorus components during a heating treatment due to a smaller boiling point of $P_2S_5$ compared to a melting point of $Li_2S$.

On the other hand, since lithium sulfide is expensive, a lithium compound other than lithium sulfide, metallic lithium, or the like may be used from the viewpoint of reducing a production cost of the sulfide solid electrolyte. Specifically, in this case, the present raw material preferably contains one or more selected from the group consisting of metallic lithium, lithium iodide (LiI), lithium carbonate $(Li_2CO_3)$, lithium sulfate $(Li_2SO_4)$, lithium oxide $(Li_2O)$, and lithium hydroxide (LiOH) as the Li-containing substance. These substances may be used alone or in combination of two or more kinds thereof.

The present raw material may contain further substances (compounds and the like) in addition to the above substances depending on the composition of the desired sulfide solid electrolyte or as additives or the like.

For example, when producing a sulfide solid electrolyte containing a halogen element such as F, Cl, Br or I, the present raw material preferably contains a halogen element (Ha). In this case, the present raw material preferably contains a compound containing a halogen element. Examples of the compound containing a halogen element include lithium halide (LiHa) such as lithium fluoride (LiF), lithium chloride (LiCl), lithium bromide (LiBr), and lithium iodide (LiI), phosphorus halide, phosphoryl halide, sulfur halide, sodium halide such as sodium chloride (NaCl), barium halide such as barium fluoride $(BaF_2)$, boron halide, yttrium halide such as yttrium chloride $(YCl_3)$, indium halide such as indium chloride $(InCl_3)$, zirconium halide such as zirconium chloride $(ZrCl_4)$, and lanthanum halide such as lanthanum fluoride $(LaF_2)$. As the compound containing a halogen element, lithium halides are preferable, and LiCl, LiBr, and LiI are more preferable, from the viewpoint of reactivity of the raw material. These compounds may be used alone or in combination of two or more kinds thereof.

An alkali metal halide such as lithium halide is also a compound containing an alkali metal element such as Li. When the present raw material contains an alkali metal halide, a part or all of the alkali metal element such as Li in the present raw material may be derived from the alkali metal halide such as lithium halide.

When the present raw material contains the halogen element (Ha) and the phosphorus element (P), a molar equivalent of Ha relative to P in the present raw material is preferably 0.2 molar equivalents or more, and more preferably 0.5 molar equivalents or more, from the viewpoint of improving the ionic conductivity and the like of the obtained sulfide solid electrolyte. From the viewpoint of stability of the obtained sulfide solid electrolyte, the molar equivalent of Ha is preferably 4 molar equivalents or less, and more preferably 3 molar equivalents or less.

The obtained sulfide solid electrolyte may be an amorphous sulfide solid electrolyte depending on a purpose, and from the viewpoint of improving ease of generation of an amorphous phase, it is also preferable that the present raw material contains sulfides such as $SiS_2$, $B_2S_3$, $GeS_2$, and $Al_2S_3$. By facilitating the generation of the amorphous phase, when the amorphous substance is obtained by rapid cooling, the amorphous sulfide solid electrolyte powder is obtained even when a cooling rate is reduced, thereby reducing a load on an apparatus.

From the viewpoint of imparting moisture resistance to the sulfide solid electrolyte, it is also preferable that oxides such as $SiO_2$, $B_2O_3$, $GeO_2$, $Al_2O_3$, $P_2O_5$, $ZrO_2$, $Ta_2O_5$, $TiO_2$, and $La_2O_3$ are contained. These compounds may be used alone or in combination of two or more kinds thereof.

The sulfides and oxides may be contained in the present raw material, or may be added separately when the present raw material is heated and melted. An addition amount of the sulfides or oxides is preferably 0.1 mass% or more, and more preferably 0.5 mass% or more with respect to a total amount of the raw material. The addition amount is preferably 50 mass% or less, and more preferably 40 mass% or less.

The present raw material may also contain a compound that serves as a crystal nucleus, which is described later.

The present production method is suitably used when the present raw material contains a highly volatile compound. Examples of a highly volatile compound include LiI, $B_2S_3$, S, Se, $Sb_2S_3$, and $P_2S_5$.

(Heating and Melting)

In the present production method, the sulfide solid electrolyte raw material is supplied to the first tank of the heating furnace, and the sulfide solid electrolyte raw material is heated and melted in the gas atmosphere containing the sulfur element. The raw material can be supplied, for example, by supplying the above-described sulfide solid electrolyte raw material mixed at a predetermined stoichiometric mixture ratio from a raw material supply portion provided in the first tank, for example. When the heating and the melting are continuously performed, the continuous supply of the sulfide solid electrolyte raw material is preferably a quantitative supply. The method for the above-mentioned quantitative supply is not particularly limited, but examples thereof include methods using a screw feeder, a table feeder, and gas flow conveyance.

The heating and melting of the sulfide solid electrolyte raw material is performed in the gas atmosphere containing the sulfur element. The present raw material is heated and melted in the gas atmosphere containing the sulfur element, whereby sulfur is introduced into the melt. Accordingly, since volatilization of sulfur during the heating can be prevented, the composition of the obtained sulfide solid electrolyte can be appropriately controlled. The gas containing the sulfur element is, for example, a gas containing a compound containing the sulfur element or elemental sulfur, such as a sulfur gas, a hydrogen sulfide gas, and a carbon disulfide gas.

Examples of a method for forming the gas atmosphere containing the sulfur element in the tank (first tank) of the heating furnace include a method of introducing a component containing a sulfur element into the tank of the heating furnace from a sulfur source supply portion provided in a first tank, and more specifically includes at least one of introducing a gas containing a sulfur element and introducing a solid containing a sulfur element. That is, in the present production method, the gas containing the sulfur element may be supplied to the heating furnace to obtain the gas atmosphere containing the sulfur element. In the present production method, the solid containing the sulfur element may be supplied to the heating furnace to obtain the gas atmosphere containing the sulfur element. For example, when a component containing the sulfur element is introduced from the sulfur source supply portion 23 in FIGS. 3 to 5, the gas atmosphere containing the sulfur element is formed in the gas atmosphere portion 12 in contact with the melt 11.

Examples of the method for introducing the gas containing the sulfur element include a method of introducing, into the tank (the first tank) of the heating furnace, a gas containing a sulfur element prepared in advance outside the heating furnace. The method for preparing the gas containing the sulfur element outside the heating furnace is not particularly limited. For example, it is preferable to heat a sulfur source outside the heating furnace to obtain the gas containing the sulfur element.

The sulfur source is not particularly limited as long as the sulfur source is elemental sulfur or a sulfur compound from which the gas containing the sulfur element can be obtained by heating, and examples thereof include elemental sulfur, organic sulfur compounds such as hydrogen sulfide and carbon disulfide, iron sulfides (such as FeS, $Fe_2S_3$, $FeS_2$, and $Fe_{1-x}S$), bismuth sulfide ($Bi_2S_3$), copper sulfides (such as CuS, $Cu_2S$, and $Cu_{1-x}S$), polysulfides such as lithium polysulfide and sodium polysulfide, polysulfides, and rubber subjected to a sulfur vulcanization treatment.

For example, these sulfur sources are heated in a sulfur source heating portion that is separately provided to generate the gas containing the sulfur element, and the gas is transported to the heating portion using an inert gas such as a $N_2$ gas, an argon gas, and a helium gas as a carrier gas to form a sulfur-excess atmosphere portion.

A temperature for heating the sulfur source can be appropriately selected depending on the type of the used sulfur source. For example, the temperature for heating the sulfur source is preferably 200°C to 450°C, and more preferably 300°C to 400°C.

Alternatively, the gas atmosphere containing the sulfur element may be formed by introducing the solid containing the sulfur element. In this case, the gas containing the sulfur element is obtained by heating the solid containing the sulfur element in the heating furnace, and the gas atmosphere containing the sulfur element can be formed.

Examples of the solid containing the sulfur element include solid sulfur sources such as elemental sulfur, $H_2S$, $Bi_2S_3$, iron sulfides, copper sulfides, and $CS_2$. For example, such a solid sulfur source is pneumatically transported in a fine state such as a powder to the tank (first tank) of the heating furnace by a carrier gas, so that the solid containing the sulfur element is introduced into the tank of the heating furnace. The solid containing the sulfur element may be introduced, for example, from the sulfur source supply portion provided in the first tank, or may be introduced by adding an excessive amount of the sulfur source to the sulfide solid electrolyte raw material.

In the sulfur-excess atmosphere portion, a sulfur partial pressure is preferably set to $10^{-3}$ atm to 100 atm. By setting such a sulfur partial pressure in this range, sulfur can be introduced efficiently at a low cost without complicating the apparatus.

The present production method includes setting the temperature of the bottom side of the melt obtained by the heating and melting to be higher than the temperature of the liquid surface side of the melt in the first tank. Accordingly, as described above, the sulfide solid electrolyte can be stably and efficiently produced. In the present embodiment, the temperature on the bottom side of the melt in the first tank can be measured by inserting a thermocouple or a thermocouple including a protective tube into a bottom surface of the first tank. Alternatively, the measurement can be performed by attaching a thermocouple to an outside bottom surface of the first tank. The temperature on the liquid surface side of the melt in the first tank can be measured by inserting the thermocouple or the thermocouple including a protective tube into a liquid surface of the melt in the first tank. The temperature can also be measured from above with a radiation thermometer. The measurement can also be performed by attaching the thermocouple at the same height position as a liquid surface on an outer side surface of the first tank. The measurement unit may be any unit capable of measuring a temperature of a target location, and may be any unit other than the thermocouple, such as a resistance temperature detector.

The temperature on the bottom side of the melt in the first tank is preferably higher than the temperature on the liquid surface side by 10°C or higher, more preferably 25°C or higher, and still more preferably 50°C or higher. As a difference between the temperature on the bottom side and the temperature on the liquid surface side increases, the melt is more likely to circulate, and the effects of the present invention are easily and suitably obtained. On the other hand, from the viewpoint of homogeneous dissolution of a charged raw material, the difference between the temperature on the bottom side and the temperature on the liquid surface side is preferably 750°C or less, more preferably 700°C or less, and still more preferably 650°C or less. The difference between the temperature on the bottom side and the temperature on the liquid surface side may be 10°C to 750°C, 25°C to 700°C, or 50°C to 650°C.

The temperature on the bottom side of the melt in the first tank is preferably 600°C or higher, more preferably 650°C or higher, and still more preferably 700°C or higher. Accordingly, it is easy to suitably melt the sulfide solid electrolyte raw material and circulate the melt. On the other hand, the temperature on the bottom side is preferably 1000°C or less, more preferably 950°C or less, still more preferably 900°C or less, and stepwise, 850°C or less, 800°C or less, or 750°C or less. Accordingly, the melt is less likely to be heated excessively, and an amount of components desorbed from the melt can be prevented. The temperature on the bottom side of the melt in the first tank may be 600°C to 1000°C, 650°C to 950°C, 700°C to 900°C, 700°C to 850°C, 700°C to 800°C, or 700°C to 750°C.

The temperature on the liquid surface side of the melt in the first tank is preferably 150°C or higher, more preferably 200°C or higher, and still more preferably 250°C or higher. Accordingly, the sulfide solid electrolyte raw material is easily and suitably melted. On the other hand, the temperature on the liquid surface side is preferably 950°C or less, more preferably 900°C or less, and still more preferably 850°C or less. Accordingly, the melt is suitably circulated, the melt is less likely to be heated excessively, and the amount of components desorbed from the melt can be prevented. The temperature on the liquid surface side of the melt in the first tank may be 150°C to 950°C, 200°C to 900°C, or 250°C to 850°C.

A depth of the melt in the first tank is preferably 5 cm or more, more preferably 7.5 cm or more, and still more preferably 10 cm or more. As the depth of the melt increases, sulfur is less likely to diffuse into the melt, so that the effects of the present invention can be more suitably obtained. Further, an amount of the melt increases, and the productivity is improved. An upper limit of the depth of the melt is not particularly limited, and may be, for example, 5 m or less.

As described above, in the present production method, it is preferable that the heating furnace includes the tank (the above-described first tank) to which the sulfide solid electrolyte raw material is supplied, and the additional tank (second tank) to which the melt of the sulfide solid electrolyte raw material heated and melted in the tank (first tank) is supplied, the supply of the sulfide solid electrolyte raw material to the tank (first tank) and the discharge of the melt from the additional tank (second tank) to the outside of the heating furnace are continuously performed, and the temperature of the melt in the additional tank (second tank) is controlled to be higher than the minimum temperature of the melt in the tank (first tank). Accordingly, it is possible to prevent the melt, which has not yet fully reacted after being supplied to the first tank, from being discharged from the discharge portion. Here, in the present embodiment, the temperature on the liquid surface side of the melt in the first tank described above is defined as the minimum temperature of the first tank. The temperature of the melt in the second tank can be measured by inserting the thermocouple or the thermocouple including the protective tube into the second tank. The measurement can be performed by attaching the thermocouple to a second tank outer wall surface in the vicinity of the passage between the first tank and the second tank. The measurement unit may be any unit capable of measuring a temperature of a target location, and may be any unit other than the thermocouple, such as a resistance temperature detector.

The temperature of the melt in the second tank is preferably higher than the minimum temperature of the first tank by 10°C or higher, more preferably 25°C or higher, and still more preferably 50°C or higher. As a difference between the temperature of the second tank and the minimum temperature of the first tank is larger, the effect of preventing the discharge of the unreacted melt is easily and suitably obtained. On the other hand, from the viewpoint of homogeneous dissolution of the charged raw material, the difference between the temperature of the second tank and the minimum temperature of the first tank is preferably 750°C or less, more preferably 700°C or less, and still more preferably 650°C or less. The difference between the temperature of the second tank and the minimum temperature of the first tank may be 10°C to 750°C, 25°C to 700°C, or 50°C to 650°C.

The temperature of the melt in the second tank is preferably 600°C or higher, more preferably 650°C or higher, and still more preferably 700°C or higher. Accordingly, the effect of preventing the discharge of the unreacted melt is easily and suitably obtained. On the other hand, the temperature of the melt in the second tank is preferably 1000°C or less, more preferably 950°C or less, still more preferably 900°C or less, and stepwise, 850°C or less, 800°C or less, or 750°C or less. Accordingly, the melt is less likely to be heated excessively, and the amount of components desorbed from the melt can be prevented. The temperature of the melt in the second tank may be 600°C to 1000°C, 650°C to 950°C, 700°C to 900°C, 700°C to 900°C, 700°C to 850°C, 700°C to 800°C, or 700°C to 750°C.

A time for heating and melting the raw material is not particularly limited, but may be, for example, 0.5 hours or more, 1 hour or more, or 2 hours or more. As long as the deterioration and decomposition of the components in the melt caused by the heating is tolerable, the time for heating and melting may be long. As a practical range, the time is preferably 100 hours or less, more preferably 50 hours or less, and still more preferably 25 hours or less. Further, when the heating and the melting are continuously performed, the heating and the melting may be continuously performed for a longer time. The time for heating and melting may be, for example, 0.5 hours to 100 hours, 1 hour to 50 hours, or 2 hours to 25 hours.

A pressure during the heating and melting is not particularly limited, but for example, a normal pressure or a slight pressure is preferred, and normal pressure is more preferred.

From the viewpoint of preventing side reactions with water vapor, oxygen, and the like during the heating and melting, a dew point in the furnace (each tank) is preferably -20°C or lower. The lower limit is not particularly limited, and is generally -80°C or more. The dew point in the furnace (in each tank) may be -80°C to -20°C. An oxygen concentration is preferably 1,000 ppm by volume or less.

(Cooling Step)

The present production method preferably further includes a step of cooling the melt obtained by the heating and melting to obtain a solid. The cooling may be performed by a known method, and the method is not particularly limited. After the heating and melting step, the cooling may be continued in the heating furnace, or the melt may be removed from the heating furnace and then cooled. When the melt is removed from the heating furnace and cooled, for example, the melt is discharged from the above-described discharge portion.

More specific examples of a cooling method include a method of pouring the melt onto a water-cooled member, a method of pouring the melt onto a rotating roll that is internally water-cooled to obtain a flake, and a method of sandwiching the melt between two pairs of rolls that are internally water-cooled to obtain a flake. When the melt is cooled by the above method or the like to obtain a plate or a flake, it is preferable that a thickness of the melt after being poured and a thickness of the resulting solid are relatively thin, from the viewpoint of improving the cooling efficiency. Specifically, the thickness is preferably 10 mm or less, and more preferably 5 mm or less. A lower limit of the thickness is not particularly limited, but may be 0.01 mm or more, or may be 0.02 mm or more. When the melt is poured into a narrow gap to be formed into a thin shape, the cooling efficiency is excellent, and a solid in a flake form, fiber form, or powder form is obtained. The obtained solid can be obtained in any shape by being crushed into pieces of a size that is easy to handle. Among these shapes, a solid in a shape of a block is preferred since it is easier to recover. The "block" also includes a plate-like, flake-like, and fiber-like shapes.

The cooling rate is preferably 0.01°C/sec or more, more preferably 0.05°C/sec or more, and still more preferably 0.1°C/sec or more, from the viewpoint of maintaining the composition obtained by the heating and melting step. An upper limit value of the cooling rate is not particularly limited, and a cooling rate of a twin-roller in which a rapid cooling rate is generally said to be high, is $10^7$°C/sec or less.

Here, in the case where the obtained solid is desired to be an amorphous sulfide solid electrolyte, it is preferable to obtain a solid by rapidly cooling the melt obtained by heating and melting. Specifically, the cooling rate in the case of rapid cooling is preferably 10°C/sec or more, more preferably 100°C/sec or more, still more preferably 500°C/sec or more, and even more preferably 700°C/sec or more. An upper limit value of the cooling rate is not particularly limited, and a cooling rate of a twin-roller in which a rapid cooling rate is generally said to be high, is $10^7$°C/sec or less.

On the other hand, it is also possible to obtain a sulfide solid electrolyte having a specific crystal structure or a sulfide solid electrolyte constituted by a crystal phase and an amorphous phase by performing a slow cooling in the cooling step to crystallize at least a part of the solid. The cooling rate in the case of the slow cooling is preferably 0.01°C/sec or more, and more preferably 0.05°C/sec or more. The cooling rate is preferably 500°C/sec or less, and more preferably 450°C/sec or less. The cooling rate may be less than 10°C/sec, or may be 5°C/sec or less. The cooling rate may be appropriately adjusted according to crystallization conditions.

Here, crystals contained in the sulfide solid electrolyte are preferably ion-conductive crystals. Specifically, the ion-conductive crystal is a crystal having a lithium-ion conductivity of more than $10^{-4}$ S/cm, and more preferably more than $10^{-3}$ S/cm.

When it is desired that the solid obtained after cooling is a sulfide solid electrolyte containing a crystal phase, it is preferable that the melt obtained in the heating and melting step contains a compound that serves as a crystal nucleus. In this way, it is easier for crystals to precipitate in the cooling step. A method for containing a compound that serves as a crystal nucleus in the melt is not particularly limited, but examples thereof include a method of adding a compound that serves as a crystal nucleus to the raw material or a heated raw material, and a method of adding a compound that serves as a crystal nucleus to the melt during heating and melting.

Examples of the compound that serves as the crystal nucleus include oxides, oxynitrides, nitrides, carbides, other chalcogen compounds, and halides. The compound that serves as a crystal nucleus is preferably a compound having a certain degree of compatibility with the melt. A compound that is completely incompatible with the melt cannot serve as a crystal nucleus.

When it is desired that the solid obtained after cooling is a sulfide solid electrolyte containing a crystal phase, a content of the compound that serves as a crystal nucleus in the melt is preferably 0.01 mass% or more, more preferably 0.1 mass% or more, and still more preferably 1 mass% or more. On the other hand, from the viewpoint of preventing a decrease in the lithium-ion conductivity, the content of the compound that serves as the crystal nucleus in the melt is preferably 20 mass% or less, and more preferably 10 mass% or less.

If it is desired that the solid obtained after cooling is an amorphous sulfide solid electrolyte, it is preferable that the melt does not contain any compound that serves as a crystal nucleus, or that a content of the compound is a predetermined amount or less. Specifically, the content of the compound that serves as a crystal nucleus in the melt is preferably 1 mass% or less, and more preferably 0.1 mass% or less. The content of the compound that serves as a crystal nucleus in the melt may be less than 0.01 mass%.

(Reheating Treatment)

When the solid obtained in the cooling of the melt is an amorphous sulfide solid electrolyte or a sulfide solid electrolyte containing an amorphous phase, the present production method may further include a step of reheating the solid electrolyte. By reheating the sulfide solid electrolyte containing a sulfide solid electrolyte crystal, ions in the crystal structure can be re-arranged, thereby increasing the lithium-ion conductivity. The reheating treatment refers to at least one of heating the powder obtained by cooling for crystallization and re-arranging ions in the crystal structure.

(Pulverizing)

The obtained sulfide solid electrolyte may be further pulverized to further reduce a particle size of the sulfide solid electrolyte. A pulverization method may be, for example, a wet pulverization method. In the case of the wet pulverization method, a type of used solvent is not particularly limited, but since the sulfide solid electrolyte has a tendency to react with moisture and deteriorate, it is preferable to use a non-aqueous organic solvent. A type of the non-aqueous organic solvent is not particularly limited, and examples thereof include a hydrocarbon-based solvent, an organic solvent containing a hydroxy group, an organic solvent containing an ether group, an organic solvent containing a carbonyl group, an organic solvent containing an ester group, an organic solvent containing an amino group, an organic solvent containing a formyl group, an organic solvent containing a carboxy group, an organic solvent containing an amide group, an organic solvent containing a benzene ring, an organic solvent containing a mercapto group, an organic solvent containing a thioether group, an organic solvent containing a thioester group, an organic solvent containing a disulfide group, and a halogenated alkyl. Examples of the hydrocarbon-based solvent include cyclohexane, heptane, octane, and toluene, and cyclohexane, heptane, and octane are preferred from the viewpoint of a low saturated moisture concentration. From the viewpoint of adjusting the moisture concentration, it is also preferable to use a mixed solvent in which these hydrocarbon-based solvents are mixed with toluene, dibutyl ether, or the like. From the viewpoint of preventing a decrease in lithium-ion conductivity due to the sulfide solid electrolyte reacting with water during pulverization of the sulfide solid electrolyte, it is preferable that the moisture concentration of the non-aqueous organic solvent is low. The moisture concentration of the non-aqueous organic solvent may be, for example, 170 ppm by mass or less, 150 ppm by mass or less, 120 ppm by mass or less, or 100 ppm by mass or less.

The wet pulverization method may be carried out using a pulverizer such as a ball mill, a planetary ball mill, or a bead mill. **In** the wet pulverization, in addition to the above-mentioned solvent, an ether compound, an ester compound, or a nitrile compound may be added as an additive (dispersant).

When the solvent or the additive remains in the sulfide solid electrolyte obtained through the wet pulverization, a drying step may be carried out. A drying condition may be, for example, a temperature of 100°C or higher and 200°C or lower. A drying time is not particularly limited and may be, for example, 10 minutes or more and 24 hours or less. Further, the drying step may be carried out under a reduced pressure, for example an absolute pressure of 50 kPa or less. The drying step can be carried out using a hot plate, a drying oven, an electric oven, or the like.

The present production method can be used for producing various solid electrolytes, and specific examples thereof are shown in Tables 1 and 2. That is, solid electrolytes described in a column of a representative composition can be produced by melting and synthesizing raw materials described in a column of a raw material in Table 1 or 2. Those shown in Tables 1 and 2 are merely examples, and the scope of application of the present invention is not limited thereto.

[Table 1]

| Type of solid electrolyte | Crystal type | | Representative composition | Raw material |
|---|---|---|---|---|
| Li sulfide solid electrolyte | Argyrodite | | $Li_6PS_5Cl$ | $Li_2S$, $P_2S_5$, LiCl |
| | | | $Li_{5.3}P_{0.9}S_{4.2}Cl_{0.8}Br_{0.8}$ | $Li_2S$, $P_2S_5$, LiCl, LiBr |
| | | $PS_4$ tetrahedron partially substituted type (For example, high entropy) | $Li_{6.5}[P_{0.25}Si_{0.25}Ge_{0.25}Sb_{0.25}]S_5I$ | $Li_2S$, $P_2S_5$, $SiS_2$ (* may be Si), $GeS_2$, $Sb_2S_3$, LiI |
| | | P atom-free argyrodite | $Li_{6.75}Sb_{0.25}Si_{0.75}S_5I$ | $Li_2S$, $SiS_2$, $Pb_2S_3$, LiI |
| | LGPS type | | $Li_{10}GeP_2S_{12}$ | $Li_2S$, $P_2S_5$, $GeS_2$ |
| | | | $Li_{10}SnP_2S_{12}$ | $Li_2S$, $P_2S_5$, $SnS_2$ (* may be Sn) |
| | | | $Li_{9.54}Si_{1.74}P_{1.44}S_{11.7}Cl_{0.3}$ | $Li_2S$, $P_2S_5$, $SiS_2$ (* may be Si), LiCl |
| | | | $Li_{10.35}[SN_{0.27}Si_{1.08}]P_{1.65}S_{12}$ $Li_{10}Ge(P_{1-x}Sb_x)_2S_{12}$ | $Li_2S$, $P_2S_5$, $SnS_2$, $SiS_2$ $Li_2S$, $P_2S_5$, $GeS_2$, $Sb_2S_3$ |
| | | | $Li_{9.54}[Si_{0.6}Ge_{0.4}]_{1.74}P_{1.44}S_{11.1}Br_{0.3}O_0$ 6 | $Li_2S$, $P_2S_5$, $GeS_2$, $SiS_2$, LiBr |
| | LPS crystallized glass type | | $Li_3PS_4$ | $Li_2S$, $P_2S_5$ |
| | | | $Li_7P_3S_{11}$ | $Li_2S$, $P_2S_5$ |
| | | $PS_4$ tetrahedron partially substituted type (for example, $SnS_4$) | $1-x(Li_3PS_4)-xLi_4SnS_4$ | $Li_2S$, $P_2S_5$, $SnS_2$ (* may be Sn) |
| | | $BH_4$ substituted type | $1-x(0.75Li_2S-0.25P_2S_5)-xLiBH_4$ | $Li_2S$, $P_2S_5$, $LiBH_4$ |
| | LPSHa crystallized glass type | | $1-x(Li_3PS_4)-xLiHa$ | $Li_2S$, $P_2S_5$, LiHa |
| | | $PS_4$ tetrahedron partially substituted type (for example, $SnS_4$) | $1-y[1-x(Li_3PS_4)-xLi_4SnS_4]-yLiHa$ | $Li_2S$, $P_2S_5$, $SnS_2$ (* may be Sn), LiHa |
| | Nitrogen-doped LPS crystallized glass type | | $1-y[(0.75-1.5x)Li_2S-0.25P_2S_5)-x(Li_3N)]-yLiHa$ | $Li_2S$, $P_2S_5$, $Li_3N$ (* N source may be, for example, $Si_3N_4$), LiHa |
| | Oxygen-doped LPS crystallized glass type | | $1-y[(0.75-x)Li_2S-0.25P_2S_5)-x(Li_2O)]-y-LiHa$ | $Li_2S$, $P_2S_5$, $Li_2O$ (* O source may be, for example, $Li_2CO_3$), LiHa |

[Table 2]

| Type of solid electrolyte | Crystal type | Representative composition | Raw material |
|---|---|---|---|
| Li halide solid electrolyte | Li-M-Ha-based (Octahedral) | $Li_3YCl_6$ | $LiCl$, $YCl_3$ |
| | | $Li_3YCl_3Br_3$ | $LiCl$, $LiBr$, $YCl_3$ |
| | **Li-M-Ha** Based (Monoclinic) | $Li_3InCl_6$ | $LiCl$, $InCl_3$ |
| | Li-M-Ha-based (Trigonal) | $Li_2ZrCl_6$ | $LiCl$, $ZrCl_4$ |
| Li acid halide solid electrolyte | Li-O-Ha-based (antiperovskite) | $Li_3OCl$ | $LiCl$, $Li_2O$ |
| | | $Li_3OCl_{0.5}Br_{0.5}$ | $LiCl$, $LiBr$, $Li_2O$ |
| Li oxide solid electrolyte | Garnet | $Li_7La_3Zr_2O_{12}$ | $Li_2CO_3$, $ZrO_2$, $La_2O_3$ |
| | | $Li_{6.5}La_3Zr_{1.5}Ta_{0.5}O_{12}$ | $Li_2CO_3$, $ZrO_2$, $La_2O_3$, $Ta_2O_5$ |
| | Perovskite | $Li_{0.3}La_{0.57}TiO_3$ | $Li_2CO_3$, $TiO_2$, $La_2O_3$ |
| | NASICON | $LiTi_2(PO_4)_3$ | $Li_2CO_3$, $TiO_2$, $P_2O_5$ |
| Na sulfide solid electrolyte | Cubic | $Na_3PS_4$ | $Na_2S$, $P_2S_5$ |
| | | $Na_{2.9}PS_{3.9}Cl_{0.1}$ | $Na_2S$, $P_2S_5$, $NaCl$ |
| | | $Na_{2.9}Sb_{0.9}W_{0.1}S_4$ | $Na_2S$, $Sb_2S_3$, $WS_2$ |
| Fluoride ion-conductive solid electrolyte | $AE_{1-x}M_xF_{2+x}$ (AE = Ca, Sr, Ba; M = RE) | $Ba_{0.6}La_{0.4}F_{2.4}$ | $BaF_2$, $LaF_2$ |

(Sulfide Solid Electrolyte)

The sulfide solid electrolyte obtained by the present production method includes a sulfide solid electrolyte containing a lithium element. Examples of the sulfide solid electrolyte obtained by the present production method include a sulfide solid electrolyte having an LGPS crystal structure such as $Li_{10}GeP_2S_{12}$, a sulfide solid electrolyte having an argyrodite crystal structure such as $Li_6PS_5Cl$, $Li_{5.4}PS_{4.4}Cl_{1.6}$, and $Li_{5.4}PS_{4.4}Cl_{0.8}Br_{0.8}$, Li-P-S-Ha-based (Ha represents at least one element selected from the halogen elements) crystallized glass; and LPS crystallized glass such as $Li_7P_3S_{11}$.

Examples of the sulfide solid electrolyte obtained by the present production method also include those described in Tables 1 and 2 above.

Depending on the purpose, the sulfide solid electrolyte may be an amorphous sulfide solid electrolyte, a sulfide solid electrolyte having a specific crystal structure, or a sulfide solid electrolyte including a crystal phase and an amorphous phase. The crystal phase is more preferably an argyrodite crystal phase from the viewpoint of lithium-ion conductivity.

As a sulfide solid electrolyte having excellent lithium-ion conductivity, a sulfide solid electrolyte having elements of Li-P-S-Ha is preferable, and it is more preferable that the sulfide solid electrolyte has a crystal phase. In the halogen element, the halogen element is preferably derived from one or more selected from the group consisting of lithium chloride, lithium bromide, and lithium iodide.

The lithium-ion conductivity of the sulfide solid electrolyte is preferably $1.0 \times 10^{-4}$ S/cm or more, more preferably $5.0 \times 10^{-4}$ S/cm or more, still more preferably $1.0 \times 10^{-3}$ S/cm or more, and particularly preferably $5.0 \times 10^{-3}$ S/cm or more from the viewpoint of improving the battery characteristics when used in a lithium-ion secondary battery. The lithium-ion conductivity is measured using an AC impedance measuring device (for example, potentiostat/galvanostat VSP, manufactured by Bio-Logic Sciences Instruments) under the following measurement conditions: measurement frequency: 100 Hz to 1 MHz, measurement voltage: 100 mV, measurement temperature: 25°C.

The obtained sulfide solid electrolyte can be identified by analyzing the crystal structure by X-ray diffraction (XRD) measurement, and analyzing the elemental composition using various methods such as ICP emission spectrometry, atomic absorption spectrometry, and ion chromatography. For example, P and S can be measured by ICP emission spectrometry, Li can be measured by atomic absorption spectrometry, and Ha can be measured by ion chromatography.

By performing the Raman spectrum measurement, homogeneity of the composition of the sulfide solid electrolyte can be evaluated. Specifically, samples obtained from the obtained sulfide solid electrolyte are subjected to the Raman spectrum measurement at any two or more points. From the viewpoint of improving accuracy of the evaluation, the number of measurement points is preferably 8 or more, and more preferably 10 or more. Preferable conditions for the Raman spectrum measurement when evaluating the homogeneity of the composition of a sulfide solid electrolyte include a spot diameter of 3 μm and the number of 10 of the measurement points. By setting the spot diameter to

3 $\mu$m, an analysis area in the Raman spectrum measurement becomes a size suitable for evaluating the homogeneity of the composition of the sulfide solid electrolyte at a micro level.

It is believed that the smaller the variation in the peak wavenumber (peak position) resulting from the structure of the sulfide solid electrolyte is, such as $PS_4^{3-}$ in each measurement result, the more homogeneous the composition of the sulfide solid electrolyte is. Alternatively, it is believed that the smaller the variation in the full width at half maximum of the peaks resulting from the structure of the sulfide solid electrolyte is, the more homogeneous the composition of the sulfide solid electrolyte is.

It is preferable to confirm peaks derived from a P-S bond as the peaks derived from the structure of the sulfide solid electrolyte although it depends on the composition of the obtained sulfide solid electrolyte. A position of the peak derived from the P-S bond varies depending on the composition system, but typically, the position is between 350 cm$^{-1}$ and 500 cm$^{-1}$. Hereinafter, in the present specification, the variation in peak position and the variation in full width at half maximum of the peak refer to those confirmed for the most intense peak among the peaks derived from the P-S bond.

The variation in peak position can be evaluated as follows. That is, when a standard deviation of the peak positions for each measurement point obtained by the Raman spectrum measurement is calculated and the variation in peak position is expressed as (peak position average value) $\pm$ (standard deviation), a standard deviation value is preferably within 2 cm$^{-1}$, more preferably within 1 cm$^{-1}$, and still more preferably within 0.5 cm$^{-1}$. Here, the peak position refers to a position of a peak top. For example, when the sulfide solid electrolyte obtained by the present production method was subjected to the Raman spectrum measurement with a spot diameter of 3 $\mu$m and 10 measurement points, the standard deviation of the peak positions of the peaks derived from the P-S bond in a range of 350 cm$^{-1}$ to 500 cm$^{-1}$ for each measurement point is preferably within 2 cm$^{-1}$, more preferably within 1 cm$^{-1}$, and still more preferably within 0.5 cm$^{-1}$.

The variation in full width at half maximum of the peaks can be evaluated as follows. That is, the standard deviation of the full width at half maximum of the peaks for each measurement point obtained by the Raman spectrum measurement is calculated by determining the full width at half maximum of each peak and then calculating a standard deviation of the values. When the variation in full width at half maximum is expressed as (average value of full width at half maximum of peaks) $\pm$ (standard deviation), the standard deviation value is preferably within 2 cm$^{-1}$, and more preferably within 1.5 cm$^{-1}$. The full width at half maximum of the peaks herein refers to a width at which half the peak intensity of the peaks derived from the P-S bond intersects with the peaks derived from the P-S bond when the Raman spectrum is plotted. For example, when the sulfide solid electrolyte obtained by the present production method was subjected to the Raman spectrum measurement with a spot diameter of 3 $\mu$m and 10 measurement points, the standard deviation in full width at half maximum of the peaks derived from the P-S bond in a range of 350 cm$^{-1}$ to 500 cm$^{-1}$ for each measurement point is preferably within 2 cm$^{-1}$, and more preferably within 1.5 cm$^{-1}$.

The present invention is not limited to the above-described embodiments, and various modifications can be adopted within the scope of the present invention. For example, the present invention is not limited to the above-described embodiments, and may be modified and improved as appropriate. In addition, the material, shape, size, number, arrangement place, and the like of each component in the above-described embodiments are optional as long as the present invention can be achieved, and are not limited.

EXAMPLES

Hereinafter, the present invention is described in detail with reference to Examples, but the present invention is not limited thereto. Examples 1-3 to 1-5 are inventive examples, Examples 1-1 and 1-2 are comparative examples, and Examples 2-1 to 2-5 are reference examples.

(Examples 1-1 to 1-5)

Assuming that the sulfide solid electrolyte raw material was heated and melted in a gas atmosphere containing a sulfur element, simulations of Examples 1-1 to 1-5 were performed under the following conditions and methods, except that a temperature on a liquid surface side of the melt and a temperature on a bottom side of the melt in each example were set as shown in Table 3. By using this simulation, an amount of sulfur element introduced into the melt from the gas atmosphere containing the sulfur element was estimated. In the following simulation, conditions are set using representative physical property values of the sulfide solid electrolyte, and it is considered that similar results are obtained in sulfide solid electrolytes having various compositions.

(Method)

(1) Assuming that a melt occupies a cylindrical region of 100 mm in diameter $\times$ 100 mm in height in a tank (first tank) of the heating furnace, the melt was modeled using a semicylindrical model (half symmetric model) as shown in FIG. 6 under the following conditions and analysis method. A temperature of a surface A in FIG. 6 was set as a temperature (upper temperature) of the liquid surface side of the melt, and a temperature of a surface B was set as the temperature (lower temperature) on the bottom side of the melt.

(2) The following reaction was calculated with respect to the liquid surface (surface A) of the melt.

(Electrolyte Before Sulfur Addition) + S → (Sulfur-added Electrolyte)

Reaction rate: $1 \times$ molar concentration before sulfur addition = molar concentration of produced sulfur-added electrolyte kmol/m$^2$/sec

(3) A reaction calculation was performed for 120 seconds, and an amount (wt%, average sulfur addition concentration) of sulfur added to the melt was calculated based on a concentration of the reacted melt using the following formula. Results are shown in Table 3.
$0.3 \times 32/266 \times$ molar concentration of sulfur-added electrolyte

Here, the molar concentration of the sulfur-added electrolyte means a molar concentration of an electrolyte after sulfur is added with respect to an electrolyte before the addition. That is, the molar concentration of the sulfur-added electrolyte in a saturated state in which sulfur is sufficiently contained in the entire melt is 1. Assuming that a molar concentration of sulfur increases by 0.3 when sulfur is added to reach saturation, a formula for calculating a weight percent concentration of added sulfur is given above. Further, calculation was performed assuming that a molecular weight of sulfur was 32 and a molecular weight of the sulfide solid electrolyte was 266.

(Conditions)

- Viscosity of melt: 0.01 Pa·s
- Specific gravity of melt: value obtained by the following formula.

$$\text{Density (kg/m}^3) = -0.5812 \times \text{temperature (°C)} + 2236.874699$$

- Thermal conductivity of melt: 0.620271 W/m·K
- Diffusion coefficient of reaction melt into unreacted portion: 4E - 9 m$^2$/sec
- Analysis software: starCCM ver 2022.1
- Turbulence model: K-$\varepsilon$ turbulent flow
- Implicit method unsteady analysis: time step 0.005 seconds, calculation physical time 120 seconds

The "diffusion coefficient of reaction melt into unreacted portion" means a rate coefficient when a melt to which a sulfur component is added diffuses in a melt to which the sulfur component is not added.

[Table 3]

| | Lower temperature (°C) | Upper temperature (°C) | Temperature difference (°C) | Average sulfur addition concentration (wt%) |
|---|---|---|---|---|
| Example 1-1 | 700 | 700 | 0 | 2.5% |
| Example 1-2 | 700 | 750 | -50 | 2.0% |
| Example 1-3 | 750 | 700 | 50 | 3.5% |
| Example 1-4 | 725 | 700 | 25 | 3.5% |
| Example 1-5 | 710 | 700 | 10 | 3.3% |

(Examples 2-1 to 2-5)

Sulfur (purity: 99.998%, manufactured by Sigma) in an amount shown in Table 4 was added to a mixed raw material prepared by mixing powders of Li$_2$S (purity 99.98%, manufactured by Sigma), P$_2$S$_5$ (purity 99%, manufactured by Sigma), and LiCl (purity 99.99%, manufactured by Sigma) in a molar ratio of 1.9:0.5:1.6, and an obtained mixture was heated and melted at 750°C for 0.5 hours to produce a sulfide solid electrolyte containing an argyrodite crystal in each of Examples 2-1 to 2-5. The lithium-ion conductivity of the obtained sulfide solid electrolyte was measured by the following method. The results are shown in Table 4.

(Lithium-ion Conductivity Evaluation)

The sulfide solid electrolyte of each example was pulverized to obtain a sulfide solid electrolyte powder having an average particle diameter of 10 $\mu$m. The sulfide solid electrolyte powder was compressed under a pressure of 380 MPa to prepare a powder compact as a measurement sample, and measured by using an AC impedance measuring device (potentiostat/galvanostat VSP, manufactured by Bio-Logic Sciences Instruments). The measurement conditions were as follows: a measurement frequency of 100 Hz to 1 MHz, a measurement voltage of 100 mV, and a measurement temperature of 25°C.

[Table 4]

|  | Sulfur addition concentration (wt%) | Lithium-ion conductivity (mS/cm) |
| --- | --- | --- |
| Example 2-1 | 0.0 | 0.5 |
| Example 2-2 | 1.0 | 1.2 |
| Example 2-3 | 2.0 | 1.8 |
| Example 2- | 2.5 | 4.8 |
| Example 2-5 | 3.0 | 6.7 |

From the results of Table 3, in Examples 1-3 to 1-5, which are inventive examples, the concentration of the sulfur element in the melt was higher than in Examples 1-1 and 1-2, which are comparative examples. This is considered to be because the reaction proceeds uniformly by making the temperature on the bottom side of the melt higher than the temperature on the liquid surface side of the melt, and the sulfur component is introduced, resulting in a higher overall sulfur addition concentration. According to Table 3, in Examples 1-3 to 1-5, an amount of sulfur that can be introduced in the same reaction time is relatively large, and the productivity is also excellent.

Furthermore, from the results of Table 4, it can be found that in the sulfide solid electrolyte, the lithium-ion conductivity tends to increase as the sulfur addition concentration increases. Therefore, by uniformly introducing the sulfur component into the melt by the present production method, a shortage of the sulfur component which may lower the lithium-ion conductivity can be prevented, and the quality of the obtained sulfide solid electrolyte can be stabilized.

As described above, the present description discloses the following.

1. A method for producing a sulfide solid electrolyte including: supplying a sulfide solid electrolyte raw material to a tank of a heating furnace; and heating and melting the sulfide solid electrolyte raw material in a gas atmosphere containing a sulfur element,

in which the method includes: obtaining a melt by the heating and melting; and
setting a temperature on a bottom side of the melt to be higher than a temperature on a liquid surface side of the melt in the tank.

2. The method for producing a sulfide solid electrolyte according to the above 1, in which the supply of the sulfide solid electrolyte raw material to the tank and a discharge of the melt to an outside of the heating furnace are continuously performed.

3. The method for producing a sulfide solid electrolyte according to the above 1 or 2, in which a depth of the melt in the tank is 50 mm or more.

4. The method for producing a sulfide solid electrolyte according to any one of the above 1 to 3, in which the temperature on the bottom side of the melt is 700°C or higher in the tank.

5. The method for producing a sulfide solid electrolyte according to any one of the above 1 to 4, in which in the tank, the temperature on the bottom side of the melt is higher than the temperature on the liquid surface side of the melt by 10°C or higher.

6. The method for producing a sulfide solid electrolyte according to any one of the above 1 to 5, in which the gas atmosphere containing the sulfur element is obtained by supplying a gas containing a sulfur element to the heating furnace.

7. The method for producing a sulfide solid electrolyte according to any one of the above 1 to 6, in which the gas atmosphere containing the sulfur element is obtained by supplying a solid containing a sulfur element to the heating furnace.

8. The method for producing a sulfide solid electrolyte according to any one of the above 1 to 7,

in which the heating furnace includes the tank to which the sulfide solid electrolyte raw material is supplied, and an additional tank to which the melt of the sulfide solid electrolyte raw material heated and melted in the tank is supplied, and

the supply of the sulfide solid electrolyte raw material to the tank and a discharge of the melt from the additional tank to an outside of the heating furnace are continuously performed, and a temperature of the melt in the additional tank is controlled to be higher than a minimum temperature of the melt in the tank.

9. An apparatus for producing a sulfide solid electrolyte, the apparatus including:

a heating furnace including a tank and a heating portion for heating and melting a sulfide solid electrolyte raw material in a gas atmosphere containing a sulfur element; and

a control unit configured to control a heat generation amount of the heating portion such that a temperature on a bottom side of a melt obtained by the heating and melting is higher than a temperature on a liquid surface side of the melt.

10. The apparatus for producing a sulfide solid electrolyte according to the above 9,

in which the heating furnace includes: the tank to which the sulfide solid electrolyte raw material is supplied; an additional tank to which the melt of the sulfide solid electrolyte raw material heated and melted in the tank is supplied; the heating portion for heating and melting the sulfide solid electrolyte raw material in the tank, and an additional heating portion for heating the melt in the additional tank, and

the control unit is configured to control the heat generation amount of the heating portion and a heat generation amount of the additional heating portion such that a temperature of the melt in the additional tank is higher than a minimum temperature of the melt in the tank.

Although the present invention has been described in detail with reference to specific embodiments, it is apparent to those skilled in the art that various changes and modifications can be made without departing from the spirit and scope of the present invention. The present application is based on a Japanese Patent Application (Japanese Patent Application No. 2022-176693) filed on November 2, 2022, the content of which is incorporated herein by reference.

REFERENCE SIGNS LIST

100, 200, 300 production apparatus
1 heating furnace
10 first tank (tank)
20 second tank (additional tank)
11 melt
12 gas atmosphere portion
5a, 5b, 5c first heating portion (heating portion)
6a, 6b second heating portion (additional heating portion)
7 passage portion
21 raw material supply portion
23 sulfur source supply portion
25 discharge portion
CTL control unit

**Claims**

1. A method for producing a sulfide solid electrolyte comprising: supplying a sulfide solid electrolyte raw material to a tank of a heating furnace; and heating and melting the sulfide solid electrolyte raw material in a gas atmosphere containing a sulfur element,

wherein the method comprises: obtaining a melt by the heating and melting; and
setting a temperature on a bottom side of the melt to be higher than a temperature on a liquid surface side of the melt in the tank.

2. The method for producing a sulfide solid electrolyte according to claim 1, wherein the supply of the sulfide solid electrolyte raw material to the tank and a discharge of the melt to an outside of the heating furnace are continuously performed.

3. The method for producing a sulfide solid electrolyte according to claim 1, wherein a depth of the melt in the tank is 50 mm or more.

4. The method for producing a sulfide solid electrolyte according to claim 1, wherein the temperature on the bottom side of the melt is 700°C or higher in the tank.

5. The method for producing a sulfide solid electrolyte according to claim 1, wherein in the tank, the temperature on the bottom side of the melt is higher than the temperature on the liquid surface side of the melt by 10°C or higher.

6. The method for producing a sulfide solid electrolyte according to claim 1, wherein the gas atmosphere containing the sulfur element is obtained by supplying a gas containing a sulfur element to the heating furnace.

7. The method for producing a sulfide solid electrolyte according to claim 1, wherein the gas atmosphere containing the sulfur element is obtained by supplying a solid containing a sulfur element to the heating furnace.

8. The method for producing a sulfide solid electrolyte according to any one of claims 1 to 7,

wherein the heating furnace comprises the tank to which the sulfide solid electrolyte raw material is supplied, and an additional tank to which the melt of the sulfide solid electrolyte raw material heated and melted in the tank is supplied, and
the supply of the sulfide solid electrolyte raw material to the tank and a discharge of the melt from the additional tank to an outside of the heating furnace are continuously performed, and a temperature of the melt in the additional tank is controlled to be higher than a minimum temperature of the melt in the tank.

9. An apparatus for producing a sulfide solid electrolyte, the apparatus comprising:

a heating furnace comprising a tank and a heating portion for heating and melting a sulfide solid electrolyte raw material in a gas atmosphere containing a sulfur element; and
a control unit configured to control a heat generation amount of the heating portion such that a temperature on a bottom side of a melt obtained by the heating and melting is higher than a temperature on a liquid surface side of the melt.

10. The apparatus for producing a sulfide solid electrolyte according to claim 9,

wherein the heating furnace comprises: the tank to which the sulfide solid electrolyte raw material is supplied; an additional tank to which the melt of the sulfide solid electrolyte raw material heated and melted in the tank is supplied; the heating portion for heating and melting the sulfide solid electrolyte raw material in the tank, and an additional heating portion for heating the melt in the additional tank, and
the control unit is configured to control the heat generation amount of the heating portion and a heat generation amount of the additional heating portion such that a temperature of the melt in the additional tank is higher than a minimum temperature of the melt in the tank.

## FIG. 1

```
                          ┌─────────┐
                          │  START  │
                          └────┬────┘
                               │
  ┌────────────────────────────▼──────────────────────────────┐
  │ IN TANK OF HEATING FURNACE, HEAT AND MELT SULFIDE SOLID    │──── S11
  │ ELECTROLYTE RAW MATERIAL IN GAS ATMOSPHERE CONTAINING      │
  │ SULFUR ELEMENT                                            │
  └────────────────────────────┬──────────────────────────────┘
                               │
  ┌────────────────────────────▼──────────────────────────────┐
  │ CONTROL TEMPERATURE ON BOTTOM SIDE OF MELT OBTAINED BY     │──── S12
  │ HEATING AND MELTING TO BE HIGHER THAN TEMPERATURE ON       │
  │ LIQUID SURFACE SIDE OF MELT IN TANK                       │
  └────────────────────────────┬──────────────────────────────┘
                               │
                          ┌────▼────┐
                          │   END   │
                          └─────────┘
```

## FIG. 2

```
                          ┌─────────┐
                          │  START  │
                          └────┬────┘
                               │
  ┌────────────────────────────▼──────────────────────────────┐
  │ IN TANK OF HEATING FURNACE, HEAT AND MELT SULFIDE SOLID    │──── S21
  │ ELECTROLYTE RAW MATERIAL IN GAS ATMOSPHERE CONTAINING      │
  │ SULFUR ELEMENT                                            │
  └────────────────────────────┬──────────────────────────────┘
                               │
  ┌────────────────────────────▼──────────────────────────────┐
  │ CONTINUOUSLY PERFORM SUPPLY OF SULFIDE SOLID ELECTROLYTE   │──── S22
  │ RAW MATERIAL TO TANK AND DISCHARGE OF MELT FROM ADDITIONAL │
  │ TANK TO OUTSIDE OF HEATING FURNACE                        │
  └────────────────────────────┬──────────────────────────────┘
                               │
  ┌────────────────────────────▼──────────────────────────────┐
  │ CONTROL TEMPERATURE ON BOTTOM SIDE OF MELT OBTAINED BY     │──── S23
  │ HEATING AND MELTING TO BE HIGHER THAN TEMPERATURE OF       │
  │ LIQUID SURFACE OF MELT IN TANK                            │
  └────────────────────────────┬──────────────────────────────┘
                               │
  ┌────────────────────────────▼──────────────────────────────┐
  │ CONTROL TEMPERATURE OF MELT IN ADDITIONAL TANK TO BE       │──── S24
  │ HIGHER THAN MINIMUM TEMPERATURE OF MELT IN TANK           │
  └────────────────────────────┬──────────────────────────────┘
                               │
                          ┌────▼────┐
                          │   END   │
                          └─────────┘
```

## FIG. 3

## FIG. 4

*FIG. 5*

*FIG. 6*

## INTERNATIONAL SEARCH REPORT

| International application No. |
|---|
| **PCT/JP2023/039005** |

**A.    CLASSIFICATION OF SUBJECT MATTER**

*H01B 13/00*(2006.01)i; *C01B 25/14*(2006.01)i; *H01M 10/0562*(2010.01)i
FI:    H01B13/00 Z; C01B25/14; H01M10/0562

According to International Patent Classification (IPC) or to both national classification and IPC

**B.    FIELDS SEARCHED**

Minimum documentation searched (classification system followed by classification symbols)

H01B13/00; C01B25/14; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2022/025268 A1 (AGC INC.) 03 February 2022 (2022-02-03) | 1-10 |
| A | JP 6-115911 A (MATSUSHITA ELECTRIC IND CO LTD) 26 April 1994 (1994-04-26) | 1-10 |
| A | JP 2014-167845 A (TOYOTA MOTOR CORP) 11 September 2014 (2014-09-11) | 1-10 |
| A | JP 2021-118030 A (MITSUBISHI GAS CHEMICAL CO) 10 August 2021 (2021-08-10) | 1-10 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 December 2023** | **19 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/039005**

| Patent document cited in search report | | | Publication date (day/month/year) | Patent family member(s) | | | Publication date (day/month/year) |
|---|---|---|---|---|---|---|---|
| WO | 2022/025268 | A1 | 03 February 2022 | US | 2023/0178799 | A1 | |
| | | | | US | 2023/0198013 | A1 | |
| | | | | WO | 2022/009934 | A1 | |
| | | | | EP | 4190743 | A1 | |
| | | | | EP | 4180390 | A1 | |
| | | | | CN | 116171260 | A | |
| | | | | KR | 10-2023-0044203 | A | |
| | | | | CN | 115803285 | A | |
| | | | | KR | 10-2023-0035313 | A | |
| JP | 6-115911 | A | 26 April 1994 | (Family: none) | | | |
| JP | 2014-167845 | A | 11 September 2014 | (Family: none) | | | |
| JP | 2021-118030 | A | 10 August 2021 | (Family: none) | | | |

Form PCT/ISA/210 (patent family annex) (January 2015)

**EP 4 614 531 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06115911 A
- JP 2012096973 A
- JP 2022176693 A